# EUROPEAN PATENT APPLICATION

(11) **EP 4 648 301 A1**
(43) Date of publication of application: **12.11.2025**
(21) Application number: 25702934.8
(22) Date of filing: 04.02.2025
(51) Int. Cl.: H04B 7/0413, H04B 7/06, H04B 1/00, H04B 17/17, H04B 17/29, H04W 84/12

(54) **ELECTRONIC DEVICE AND CONTROL METHOD THEREFOR**

(30) Priority: 27.03.2024 KR 20240041949
(71) Applicant: Samsung Electronics Co., Ltd., Suwon-si, Gyeonggi-do 16677 (KR)
(72) Inventor: YOON, Kyoungsik, Suwon-si, Gyeonggi-do 16677 (KR); BAE, Yeongchan, Suwon-si, Gyeonggi-do 16677 (KR); SEO, Gaewon, Suwon-si, Gyeonggi-do 16677 (KR); YANG, Minsun, Suwon-si, Gyeonggi-do 16677 (KR)
(74) Representative: Appleyard Lees IP LLP
(86) International application number: PCT/KR2025/099257
(87) International publication number: WO 2025/206914

(57) **Abstract**

Disclosed is an electronic apparatus. The electronic apparatus includes an antenna module including at least one first antenna, at least one second antenna, and at least one common antenna, and transmitting and receiving data using the antennas; a memory configured to store antenna combination information for performing a multi input multi output (MIMO) operation or a multi-link operation; and at least one processor configured to control the antenna module to perform communication with an external device based on one combination of the antenna combination information, in which the at least one processor may be configured to identify whether an antenna is faulty based on a reception status of each of the at least one first antenna, the at least one second antenna, and the at least one common antenna, identify an available antenna combination excluding an antenna combination including a faulty antenna based on the antenna combination information when the faulty antenna is identified, and control the antenna module to communicate with the external device based on the available antenna combination.

## Description

### [Technical Field]

The present disclosure relates to an electronic apparatus and a controlling method thereof, and more particularly, to an electronic apparatus communicating with an external device through a plurality of antennas and a controlling method thereof.

### [Background Art]

Recently, with the development of wireless communication technologies such as Wi-Fi, cases of transmitting data through wireless communication between a plurality of electronic apparatuses are increasing.

Recently, the electronic apparatus is increasing a data transmission rate through data transmission technologies based on multi input multi output (MIMO) operation, multi-link operation mode, etc. In order for the electronic apparatus to perform the MIMO operation or multi-link operation, the electronic apparatus needs to include a plurality of antennas.

### [Disclosure]

### [Technical Solution]

According to an aspect of the present disclosure, an electronic apparatus includes: an antenna module including at least one first antenna, at least one second antenna, and at least one common antenna, wherein the antenna module is configured to transmit and receive data using the antennas; a memory configured to store antenna combination information for performing a multi input multi output (MIMO) operation or a multi-link operation; and at least one processor configured to control the antenna module to perform communication with an external device using an antenna combination based on the antenna combination information, in which the at least one processor is configured to identify whether an antenna is faulty based on a reception status of each of the at least one first antenna, the at least one second antenna, and the at least one common antenna, identify an available antenna combination excluding an antenna combination including a faulty antenna based on the antenna combination information when the faulty antenna is identified, and control the antenna module to communicate with the external device based on the available antenna combination, wherein the at least one first antenna and the at least one second antenna are configured to operate in a first frequency band and a second frequency band, respectively, and wherein the at least one common antenna is configured to selectively operate in the first frequency band and the second frequency band.

The antenna combination information may include first ranking information generated based on a performance difference for each antenna in the first frequency band and second ranking information generated based on performance difference for each antenna in the second frequency band, and the at least one processor may identify the available antenna combination based on the first ranking information and the second ranking information when the faulty antenna is identified.

The at least one processor may be configured to identify the available antenna combination by checking whether the antennas are available in order from a highest-ranking antenna to a lowest-ranking antenna based on the first ranking information when the faulty antenna is identified as an antenna used for communication with the external device in the first frequency band, and identify the available antenna combination by checking whether the antennas are available in order from a highest-ranking antenna to a lowest-ranking antenna based on the second ranking information when the faulty antenna is identified as an antenna used for communication with the external device in the second frequency band.

The antenna combination information may include first MIMO ranking information and second MIMO ranking information, the at least one processor may be configured to identify an antenna combination for a MIMO operation in the first frequency band based on the first MIMO ranking information when the faulty antenna is identified as an antenna used for the MIMO operation in the first frequency band, and identify an antenna combination for a MIMO operation in the second frequency band based on the second MIMO ranking information when the faulty antenna is identified as an antenna used for the MIMO operation in the second frequency band, the first MIMO ranking information may be ranking information generated based on a performance difference for each of a plurality of antenna combinations for the MIMO operation in the first frequency band, and the second MIMO ranking information may be ranking information generated based on a performance difference for each of a plurality of antenna combinations for the MIMO operation in the second frequency band.

The antenna combination information may include multi-link ranking information generated based on a performance difference for each of the plurality of antenna combinations forming a first communication link with the external device in the first frequency band and a second communication link with the external device in the second frequency band, and the at least one processor may be configured to identify the available antenna combination by determining whether multi-link is possible for the plurality of antenna combinations in an order from a highest-ranking antenna combination to a lowest-ranking antenna combination based on the multi-link ranking information when the faulty antenna is identified as the antenna used for forming the first communication link or the second communication link.

The antenna module may include at least one third antenna operating in a third frequency band, and the at least one processor may be configured to identify whether the antenna is faulty based on the reception status of each of the at least one first antenna, the at least one second antenna, the at least one third antenna, and the at least one common antenna.

The available antenna combination may include a first combination for performing the MIMO operation in the first frequency band, a second combination for performing the MIMO operation in the second frequency band, and a third combination for performing the multi-link operation, and the at least one processor may be configured to identify one of the first combination, the second combination, and the third combination based on interference information of a communication environment and required bandwidth information for transmitting and receiving data with the external device, and control the antenna module to communicate with the external device based on the identified one combination.

The at least one processor may be configured to identify an antenna that maintains received signal strength values in a preset range for a preset time among the at least one first antenna, the at least one second antenna, and the at least one common antenna, and identify the identified antenna as the faulty antenna.

The at least one processor may be configured to compare the received signal strength values of the at least one first antenna, the at least one second antenna, and the at least one common antenna with each other, and identify a difference in the received signal strength values for each of the at least one first antenna, the at least one second antenna and the at least one third antenna with the other antennas of the at least one first antenna, the at least one second antenna and the at least one third antenna included in the electronic apparatus, and identify an antenna in which a representative value of the difference is negative and the representative value is smaller than the preset value as the faulty antenna.

The electronic apparatus may further include a sensor, in which when it is identified that an external force greater than or equal to a threshold value is applied to the electronic apparatus based on a sensing value of the sensor, the at least one processor is configured to identify whether the antenna is faulty based on the reception status of each of the at least one first antenna, the at least one second antenna, and the at least one common antenna.

According to another aspect of the present disclosure, a controlling method of an electronic apparatus includes: communicating with an external device through a multi input and output (MIMO) operation or a multi-link operation using an antenna module including at least one first antenna, at least one second antenna, and at least one common antenna; identifying whether an antenna is faulty based on a reception status of each of the at least one first antenna, the at least one second antenna, and the at least one common antenna; identifying an available antenna combination excluding an antenna combination including a faulty antenna based on antenna combination information when the faulty antenna is identified; and communicating with the external device based on the available antenna combination, in which the at least one first antenna and the at least one second antenna operate in a first frequency band and a second frequency band, respectively, and wherein the at least one common antenna selectively operates in the first frequency band and the second frequency band.

The antenna combination information may include first ranking information generated based on a performance difference for each antenna in the first frequency band and second ranking information generated based on a performance difference for each antenna in the second frequency band, and the identifying of the available antenna combination may include identifying the available antenna combination based on the first ranking information and the second ranking information when the faulty antenna is identified.

The identifying of the available antenna combination may include: identifying the available antenna combination by checking whether the antennas are available in order from a highest-ranking antenna to a lowest-ranking antenna based on the first ranking information when the faulty antenna is identified as an antenna used for communication with the external device in the first frequency band; and identifying the available antenna combination by checking whether the antennas are available in order from a highest-ranking antenna to a lowest-ranking antenna based on the second ranking information when the faulty antenna is identified as an antenna used for communication with the external device in the second frequency band.

The antenna combination information may include first MIMO ranking information and second MIMO ranking information, the first MIMO ranking information may be ranking information generated based on a performance difference for each of a plurality of antenna combinations for the MIMO operation in the first frequency band, and the second MIMO ranking information may be ranking information generated based on a performance difference for each of a plurality of antenna combinations for the MIMO operation in the second frequency band, and the identifying of the available antenna combination may include: identifying an antenna combination for a MIMO operation in the first frequency band based on the first MIMO ranking information when the faulty antenna is identified as an antenna used for the MIMO operation in the first frequency band; and identifying an antenna combination for a MIMO operation in the second frequency band based on the second MIMO ranking information when the faulty antenna is identified as an antenna used for the MIMO operation in the second frequency band.

The antenna combination information may include multi-link ranking information generated based on a performance difference for each of the plurality of antenna combinations forming a first communication link with the external device in the first frequency band and a second communication link with the external device in the second frequency band, and the identifying of the available antenna combination may include identifying the antenna combination by checking whether a multi-link is possible for the plurality of antenna combinations in an order from a highest-ranking antenna combination to a lowest-ranking antenna combination based on the multi-link ranking information when the faulty antenna is identified as the antenna used for forming the first communication link or the second communication link.

The available antenna combination may include a first combination for performing the MIMO operation in the first frequency band, a second combination for performing the MIMO operation in the second frequency band, and a third combination for performing the multi-link operation, and the communicating of with the external device based on the available antenna combination may include identifying one of the first combination, the second combination, and the third combination based on interference information of a communication environment and required bandwidth information for transmitting and receiving data with the external device, and communicating with the external device based on the identified one combination.

The identifying of whether the antenna is faulty may include identifying an antenna that maintains received signal strength values in a preset range for a preset time among the at least one first antenna, the at least one second antenna, and the at least one common antenna, and identifying the identified antenna as the faulty antenna.

The identifying of whether the antenna is faulty may include comparing the received signal strength values of the at least one first antenna, the at least one second antenna, and the at least one common antenna with each other, identifying a difference in the received signal strength values for each of the at least one first antenna, the at least one second antenna and the at least one third antenna with the other antennas of the at least one first antenna, the at least one second antenna and the at least one third antenna included in the electronic apparatus, and identifying an antenna in which a representative value of the difference is negative and the representative value is smaller than the preset value as the faulty antenna.

When it is identified that an external force greater than or equal to a threshold value is applied to the electronic apparatus based on a sensing value of the sensor, the identifying of whether the antenna is faulty may include identifying whether the antenna is faulty based on the reception status of each of the at least one first antenna, the at least one second antenna, and the at least one common antenna.

According to still another aspect of the present disclosure, there is provided a non-transitory computer-readable medium storing a computer instruction to cause an electronic apparatus to perform an operation when executed by a processor of the electronic apparatus, in which the operation of the electronic apparatus includes: communicating with an external device through a multi input and output (MIMO) operation or a multi-link operation using an antenna module including at least one first antenna, at least one second antenna, and at least one common antenna; identifying whether an antenna is faulty based on a reception status of each of the at least one first antenna, the at least one second antenna, and the at least one common antenna; identifying an available antenna combination excluding an antenna combination including a faulty antenna based on antenna combination information when the faulty antenna is identified; and communicating with the external device based on the available antenna combination, the at least one first antenna and the at least one second antenna may operate in a first frequency band and a second frequency band, respectively, and the at least one common antenna may selectively operate in the first frequency band and the second frequency band.

### [Description of Drawings]

FIG. 1 is a diagram for describing an operation of an electronic apparatus according to one or more example embodiments of the present disclosure;
FIG. 2 is a block diagram for describing a configuration of the electronic apparatus according to one or more example embodiments of the present disclosure;
FIG. 3 is a diagram for describing a multi input multi output (MIMO) operation of the electronic apparatus according to one or more example embodiments of the present disclosure;
FIG. 4 is a diagram for describing a multi-link operation of the electronic apparatus according to one or more example embodiments of the present disclosure;
FIG. 5 is a diagram for describing a method for identifying whether an antenna of an electronic apparatus is faulty according to one or more example embodiments of the present disclosure;
FIG. 6 is a diagram for describing a method for identifying an available antenna combination of an electronic apparatus according to one or more example embodiments of the present disclosure;
FIG. 7 is a diagram for describing the method for identifying an available antenna combination of an electronic apparatus according to one or more example embodiments of the present disclosure;
FIG. 8 is a diagram for describing the method for identifying an available antenna combination of an electronic apparatus according to one or more example embodiments of the present disclosure;
FIG. 9 is a diagram for describing a method of controlling an antenna module of an electronic apparatus according to one or more example embodiments of the present disclosure;
FIG. 10 is a flowchart for describing a method of communicating with an external device of an electronic apparatus according to one or more embodiments of the present disclosure; and
FIG. 11 is a flowchart for describing a method of identifying whether an antenna of an electronic apparatus is faulty according to one or more example embodiments of the present disclosure.

### [Mode for Invention]

Because the disclosure may be variously modified and have several example embodiments, specific embodiments of the disclosure will be illustrated in the drawings and be described in detail in a detailed description. However, it is to be understood that the disclosure is not limited to specific embodiments, but includes various modifications, equivalents, and/or alternatives according to embodiments of the disclosure. Throughout the accompanying drawings, similar components will be denoted by similar reference numerals.

In describing the present disclosure, when it is determined that a detailed description for the known functions or configurations related to the present disclosure may unnecessarily obscure the gist of the present disclosure, the detailed description therefor will be omitted.

In addition, the following example embodiments may be modified in multiple different forms, and the scope and spirit of the disclosure are not limited to the following example embodiments. Rather, these example embodiments make the disclosure thorough and complete, and are provided to completely transfer a technical spirit of the disclosure to those skilled in the art.

Terms used in the disclosure are used only to describe specific embodiments rather than limiting the scope of the disclosure. Singular forms include plural forms unless the context clearly indicates otherwise.

In the specification, an expression "have", "may have", "include", "may include", or the like, indicates existence of a corresponding feature (for example, a numerical value, a function, an operation, a component such as a part, or the like), and does not exclude existence of an additional feature.

In the disclosure, an expression "A or B", "at least one of A and/or B", or "one or more of A and/or B", may include all possible combinations of items enumerated together. For example, "A or B", "at least one of A and B", or "at least one of A or B" may indicate all of 1) a case where at least one A is included, 2) a case where at least one B is included, or 3) a case where both of at least one A and at least one B are included.

Expressions "first" or "second" used in the disclosure may indicate various components regardless of a sequence and/or importance of the components, will be used only to distinguish one component from the other components, and do not limit the corresponding components.

When it is mentioned that any component (for example, a first component) is (operatively or communicatively) coupled with/to or is connected to another component (for example, a second component), it is to be understood that any component is directly coupled to another component or may be coupled to another component through the other component (for example, a third component).

On the other hand, when it is mentioned that any component (for example, a first component) is "directly coupled" or "directly connected" to another component (for example, a second component), it is to be understood that the other component (for example, a third component) is not present between any component and another component.

An expression "configured (or set) to" used in the disclosure may be replaced by an expression "suitable for", "having the capacity to" "designed to", "adapted to", "made to", or "capable of" depending on a situation. A term "configured (or set) to" may not necessarily mean "specifically designed to" in hardware.

Instead, in some situations, an expression "apparatus configured to" may mean that the apparatus may "do" together with other apparatuses or components. For example, a "processor configured (or set) to perform A, B, and C" may mean a dedicated processor (for example, an embedded processor) for performing the corresponding operations or a generic-purpose processor (for example, a central processing unit (CPU) or an application processor) that may perform the corresponding operations by executing one or more software programs stored in a memory device.

In embodiments, a 'module' or a '~er/for' may perform at least one function or operation, and be implemented by hardware or software or be implemented by a combination of hardware and software. In addition, a plurality of "modules" or a plurality of "~ers/ors" may be integrated in at least one module and be implemented by at least one processor except for a 'module' or an '~er/or' that needs to be implemented by specific hardware.

Meanwhile, various elements and regions in the drawings are schematically illustrated. Therefore, the spirit of the disclosure is not limited by relatively sizes or intervals illustrated in the accompanying drawings.

Hereinafter, embodiments of the disclosure will be described in detail with reference to the accompanying drawings so that those skilled in the art to which the disclosure pertains may easily practice the disclosure.

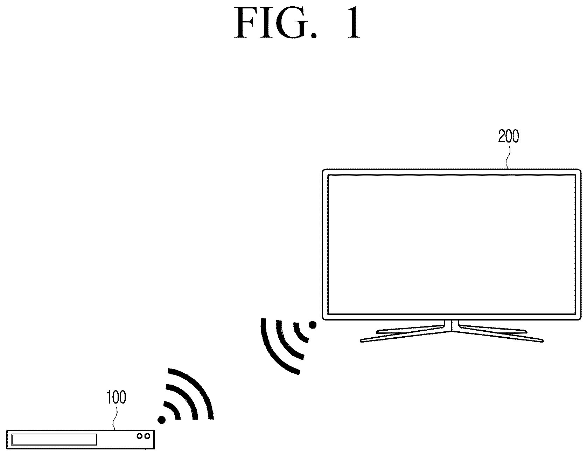

FIG. 1 is a diagram for describing an operation of an electronic apparatus according to one or more example embodiments of the present disclosure.

Referring to FIG. 1, an electronic apparatus 100 forms a wireless communication network with an external device 200.

In the example illustrated in FIG. 1, the electronic apparatus 100 is implemented as a set-top box that transmits image data to the external device 200, and the external device 200 is implemented as a TV that receives content from the electronic apparatus 100.

The electronic apparatus 100 is configured to transmit data to the external device 200 and receive data from the external device 200 based on the wireless communication network. For example, the electronic apparatus 100 may transmit image data corresponding to an image to be displayed on the external device 200 through the wireless communication network.

For example, when the wireless communication network between the electronic apparatus 100 and the external device 200 is a Wi-Fi network, the electronic apparatus 100 may transmit and receive data based on an antenna module included in the electronic apparatus. When a volume of data to be transmitted by the electronic apparatus 100 to the external device 200 is large, a data transmission rate required for the Wi-Fi network may be very high (for example, a data transmission rate of 300 Mbps). In this case, the electronic apparatus 100 may form a Wi-Fi network with the external device 200 by combining a plurality of antennas included in the antenna module instead of using only a single antenna. In this case, when a faulty antenna exists among the plurality of antennas included in the antenna module, the electronic apparatus 100 may not secure the data transmission rate required for data transmission by using the antenna combination including the faulty antenna.

The electronic apparatus 100 is configured to identify a faulty antenna among the plurality of antennas included in the antenna module and form the wireless communication network with the external device 200 based on the available antenna combination excluding the faulty antenna. Accordingly, the electronic apparatus 100 may identify an optimal antenna combination for forming the wireless communication network with the external device 200 even when the faulty antenna exists among the plurality of antennas, thereby achieving the effect of maintaining the stable wireless communication with the external device 200.

In the present disclosure, the "fault state of the antenna" may mean a state of the antenna that may not stably transmit and receive data. For example, the "fault state of the antenna" may include a case where the electronic apparatus 100 drops from a high place and the antenna built into the electronic apparatus 100 is physically damaged, or a case where the wireless communication circuit connecting the processor built into the electronic apparatus and the antenna is circuit-shorted and thus the antenna becomes unable to stably transmit and receive data.

In addition, the "fault state of the antenna" may be replaced with various expressions that represent the same/similar concepts. For example, the "fault state of the antenna" may be replaced with various expressions such as "antenna function defect", "antenna damage", "poor antenna transmission/reception signal", "antenna failure", "antenna problem state", etc. However, in the present disclosure, they are referred to collectively as "antenna fault state".

In the present disclosure, the term "available antenna combination" may refer to an antenna combination capable of forming the wireless communication network with the external device based on an antenna excluding the faulty antenna among the plurality of antennas. For example, when one antenna among four antennas included in the antenna module is in a fault state, the "available antenna combination" may include a plurality of antenna combinations capable of forming the wireless communication network with the external device based on the remaining antennas excluding the one faulty antenna.

In addition, the "available antenna combination" may be replaced with various expressions representing the same/similar concept. For example, it may be replaced with various expressions such as "remaining antenna combination", "communication-capable antenna combination", "network-formable antenna combination", and "available antenna configuration". However, in the present disclosure, they are referred to collectively as the expression "available antenna combination".

In the above description, only the case where the wireless communication network between the electronic apparatus 100 and the external device 200 is a Wi-Fi network has been described, but this is only one example, and the wireless communication network between the electronic apparatus 100 and the external device 200 may be implemented as the wireless communication network based on various wireless communication standards such as zigbee, 3rd Generation (3G), 3rd Generation Partnership Project (3GPP), Long Term Evolution (LTE), LTE Advanced (LTE-A), 4th Generation (4G), 5th Generation (5G), etc.

In Fig. 1, the electronic apparatus 100 is illustrated as a set-top box, but this is only one example, and the electronic apparatus 100 may be implemented as various devices that may perform the wireless communication with the external device 200 using the antenna module, such as an access point (AP), a smartphone, a TV, a laptop PC, a desktop PC, a tablet PC, a robot vacuum cleaner, a washing machine, and a refrigerator.

For example, when the electronic apparatus 100 is the AP, the electronic apparatus 100 may be connected to the Internet. The electronic apparatus 100 may form the wireless communication network with the external device 200 using the antenna module included in the electronic apparatus 100 while being connected to the Internet, thereby providing the external device 200 with an environment in which data communication with the Internet may be performed.

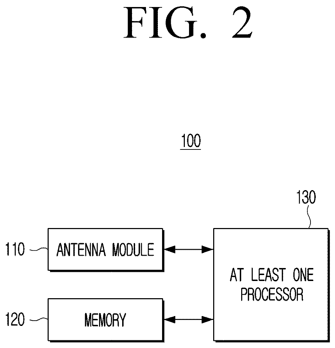

As described above, the electronic apparatus 100 forms the wireless communication network with the external device 200 based on a combination of the plurality of antennas, and in the description of FIG. 2, a method of forming a wireless communication network of the electronic apparatus 100 will be described along with a description of the configuration of the electronic apparatus 100.

FIG. 2 is a block diagram for describing a configuration of the electronic apparatus according to one or more example embodiments of the present disclosure.

Referring to FIG. 2, the electronic apparatus 100 includes an antenna module 110, a memory 120, and at least one processor 130.

The antenna module 110 is configured to transmit and receive the wireless signal through the wireless communication network. That is, the antenna module 110 may include a plurality of antennas and communication circuits.

The antenna module 110 includes three types of antennas. The antenna module 110 includes at least one first antenna, at least one second antenna, and at least one common antenna. The first antenna is an antenna for operating in a first frequency band, the second antenna is an antenna for operating in a second frequency band, and the common antenna is an antenna for selectively operating in the first frequency band and the second frequency band. That is, the common antenna may be used to transmit and/or receive signals in the first frequency band, and may be used to transmit and/or receive signals in the second frequency band.

According to one or more example embodiments, the first frequency band may be a 5 GHz frequency band, and the second frequency band may be a 6 GHz frequency band. In this case, the first antenna is an antenna used for wireless communication in a 5 GHz frequency band, the second antenna is an antenna used for wireless communication in a 6 GHz frequency band, and the common antenna is an antenna for selectively performing wireless communication in the 5 GHz frequency band and the 6 GHz frequency band.

According to one or more example embodiments, the first antenna, the second antenna, and the common antenna may include a radiator formed of a conductor or a conductive pattern formed on a substrate (e.g., a PCB).

According to one or more example embodiments, the antenna module 110 may include four types of antennas. In this case, the antenna module 110 may include at least one first antenna, at least one second antenna, at least one third antenna, and at least one common antenna. The third antenna may be an antenna for operating in a third frequency band. In this case, the third frequency band may be a 2.4 GHz frequency band. In this case, the common antenna may be an antenna that selectively operates in the first frequency band and the second frequency band, or an antenna that selectively operates in the first frequency band and the third frequency band.

The antenna module 110 may include a communication circuit including a radiofrequency integrated circuit (RFIC), a switch, a filter, etc.

According to one or more example embodiments, the RFIC may receive a signal generated by at least one processor 130 and convert the received signal into a wireless signal of the first frequency band, the second frequency band, and/or the third frequency band. The wireless signal whose frequency has been converted by the RFIC may be transmitted to the first antenna, the second antenna, the third antenna, and/or the common antenna side.

According to one or more example embodiments, the wireless signal transmitted from the RFIC to the antenna side may travel along a path of the communication circuit. In this case, a path of the communication circuit may change by a switch. The switch of the communication circuit may be implemented as a single pole double throw (SPDT) switch, a double pole double throw (DPDT) switch, etc.

According to one or more example embodiments, the communication circuit may use a filter to distinguish a wireless signal that has traveled along a path into signals of plurality of frequency bands. For example, a filter connected to the first antenna may pass only the signal of the first frequency band and transmit only the signal of the first frequency band to the first antenna. The filter of the communication circuit may be implemented as a duplexer, a diplexer, etc.

According to one or more example embodiments, the communication circuit may further include a plurality of power amplifier modules. The plurality of power amplifier modules may be configured to amplify the strength of the wireless signals of the first frequency, the second frequency, and the third frequency bands, respectively.

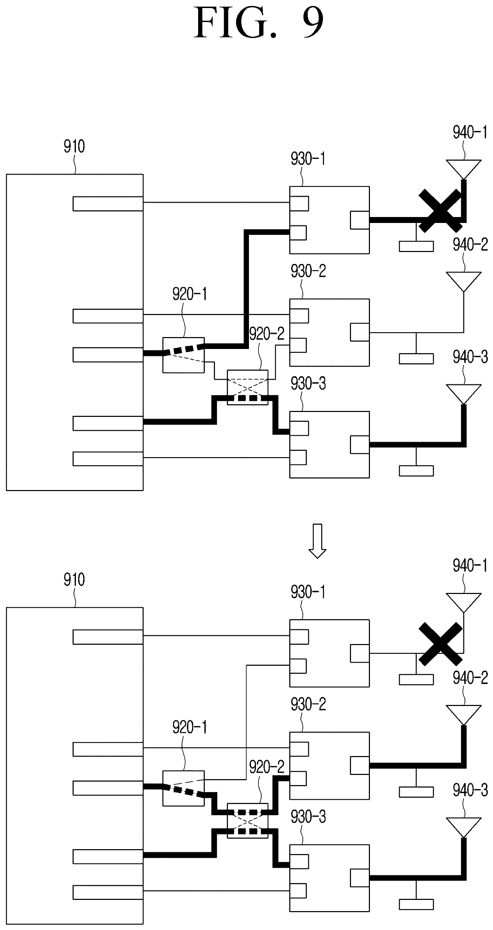

The specific operations of the plurality of antennas and the communication circuit included in the antenna module 110 will be described in detail in the description of FIG. 9.

In the above description, only the antennas for the wireless communication in the first frequency band, the second frequency band, and the third frequency band have been described, but it is to be understood that the antenna module 110 may include the plurality of antennas for performing the wireless communication in four or more frequency bands.

The memory 120 stores data necessary for implementing various embodiments of the electronic apparatus 100 according to one or more example embodiments of the present disclosure. The memory 120 may store the antenna combination information for performing a multi input multi output (MIMO) operation or a multi-link operation.

The memory 120 may be implemented in a form of a memory embedded in the electronic apparatus 100 or a form of a memory detachable from the electronic apparatus 100, depending on a data storage purpose. For example, data for driving the electronic apparatus 100 may be stored in the memory embedded in the electronic apparatus 100, and data for an extension function of the electronic apparatus 100 may be stored in the memory detachable from the electronic apparatus 100.

Meanwhile, the memory embedded in the electronic apparatus 100 may be implemented in at least one of, for example, a volatile memory (for example, a dynamic random access memory (DRAM), a static RAM (SRAM), a synchronous dynamic RAM (SDRAM), or the like), a non-volatile memory (for example, a one time programmable read only memory (OTPROM), a programmable ROM (PROM), an erasable and programmable ROM (EPROM), an electrically erasable and programmable ROM (EEPROM), a mask ROM, a flash ROM, a flash memory (for example, a NAND flash, a NOR flash, or the like), a hard drive, and a solid state drive (SSD)).

In addition, the memory 300 detachable from the electronic apparatus 100 may be implemented in the form of the memory card (e.g., compact flash (CF), secure digital (SD), micro secure digital (Micro-SD), mini secure digital (Mini-SD), extreme digital (xD), multimedia card (MMC), etc.), external memory (e.g., USB memory) connectable to a USB port, and the like.

The memory 120 includes various instructions necessary for the operation of at least one processor 130. Here, the instructions may include instructions for performing communication based on antenna combinations, instructions for performing a MIMO operation, instructions for performing a multi-link operation, instructions for identifying whether the antenna is faulty, instructions for identifying available antenna combinations, etc.

In the present disclosure, the "antenna combination information" means information on an antenna combination for performing a MIMO operation or a multi-link operation. For example, the "antenna combination information" may include information on a combination of two antennas operable in a 5 GHz frequency band for performing a 5 GHz 2 x 2 multi input multi output (MIMO) operation, and information on a combination of one antenna operating in a 5 GHz frequency band and one antenna operating in a 6 GHz frequency band for performing a 5 GHz + 6 GHz multi-link operation (MLO).

Specifically, in an example in which that there are two antennas (e.g., antenna A and antenna B) in the antenna module 110 that operates only in the 5 GHz frequency band, one antenna (e.g., antenna C) that operates only in the 6 GHz frequency band, and one common antenna (e.g., antenna D) that selectively operates in the 5 GHz frequency band and the 6 GHz frequency band, the "antenna combination information" may appear as in Table 1 below.

**[Table 1]**

| | First rank | Second Rank | Third rank | Fourth Rank |
|---|---|---|---|---|
| 5GHz 2x2 MIMO | The antenna A + Antenna B | The antenna A + Antenna D | Antenna B + Antenna D | |
| 6GHz 2x2 MIMO | Antenna C + Antenna D | | | |
| 5GHz + 6GHz MLO | The antenna A + Antenna C | Antenna B + Antenna C | The antenna A + Antenna D or Antenna C + Antenna D | Antenna B + Antenna D |

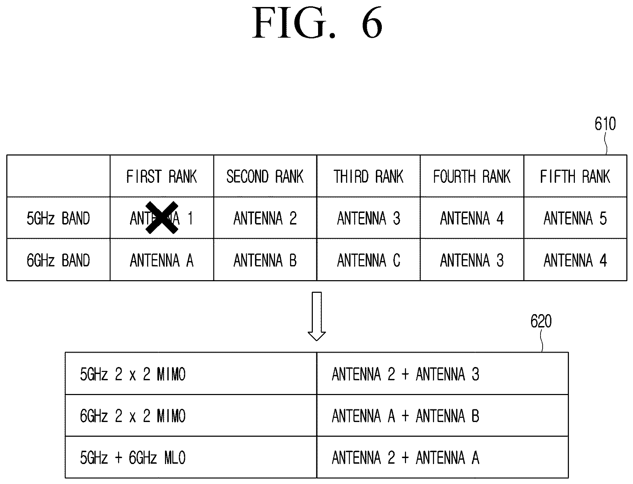

According to the above Table 1, the "antenna combination information" stored in the memory 120 includes ranking information of antenna combinations for each of the plurality of operation modes. However, Table 1 is only one example that may be implemented as the "antenna combination information", and the "antenna combination information" may be implemented in various forms. Various example embodiments of the electronic apparatus 100 based on the "antenna combination information" will be described in detail in the description of FIG. 6 to FIG. 8. Here, the "antenna combination information" may be replaced with various expressions representing the same/similar concept. For example, it may be replaced with various terms such as "antenna group information", "antenna combination setting information", "antenna setting information", and "antenna configuration information". In the present disclosure, it will be collectively referred to as the expression "antenna combination information". In the above description, the antenna combination information was described only by using the antenna combinations for the 5GHz 2x2 MIMO operation, the 6GHz 2x2 MIMO operation, and the 5GHz + 6GHz multi-link operation as examples, but this is only one example, and depending on the number of antennas included in the electronic apparatus 100, the frequency bands in which the antennas may operate, etc., the antenna combination information may further include information on the antenna combinations, etc., for the 2.4GHz 2x2 MIMO operation and the 2.4GHz + 5GHz + 6GHz multi-link operation.

Since the antenna combination information including the ranking information is stored in the memory 120 as shown in Table 1, the electronic apparatus 100 may immediately identify the antenna combination with the highest ranking even when the faulty antenna is identified, and perform uninterrupted data transmission to the external device 200.

At least one processor 130 controls the overall operation of the electronic apparatus 100. Specifically, at least one processor 130 is connected to the antenna module 110 and the memory 120, and may control the overall operation of the electronic apparatus 100 by executing at least one instruction stored in the memory 120.

The at least one processor 130 may be implemented as a digital signal processor (DSP) or a microprocessor that process a digital signal. However, the at least one processor 130 is not limited thereto, and may include one or more of a central processing unit (CPU), a micro controller unit (MCU), a micro processing unit (MPU), a controller, an application processor (AP), a communication processor (CP), and an ARM processor, or an artificial intelligence (AI) processor, or may be defined by these terms. In addition, the processor 130 may be implemented by a system-on-chip (SoC) or a large scale integration (LSI) in which a processing algorithm is embedded, or may be implemented in a field programmable gate array (FPGA) form. The at least one processor 130 may perform various functions by executing computer executable instructions stored in the memory 120.

When the method according to various example embodiments of the present disclosure includes a plurality of operations, the plurality of operations may be performed by one processor or by a plurality of processors. At least one processor 130 may be implemented as a single core processor including one core, or one or more multicore processors including a plurality of cores (e.g., homogeneous multicore or heterogeneous multicore). Hereinafter, for convenience of description, at least one processor 130 will be referred to as the processor 130.

The processor 130 controls the antenna module 110 to perform communication with the external device 200 using a combination of antennas based on the antenna combination information.

According to one or more example embodiments, the processor 130 may perform the wireless communication with the external device 200 by identifying a first ranking antenna combination for 6GHz 2 x 2 MIMO operation among the antenna combination information. According to another example embodiment, the processor 130 may perform the wireless communication with the external device 200 by identifying the first ranking antenna combination for 5GHz + 6GHz MIMO operation among the antenna combination information.

The electronic apparatus 100 according to the present disclosure may further include various configurations in addition to the configuration illustrated in FIG. 2. For example, the electronic apparatus 100 may further include a sensor.

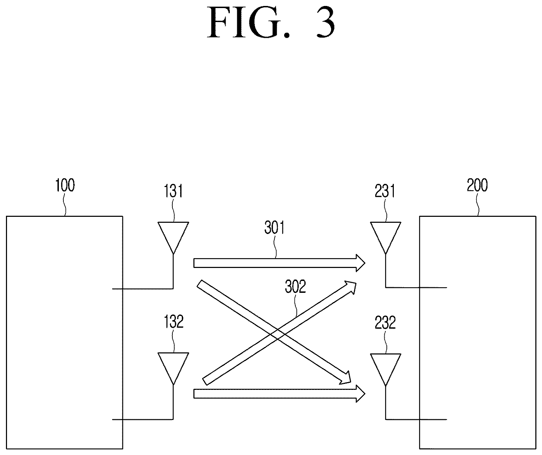

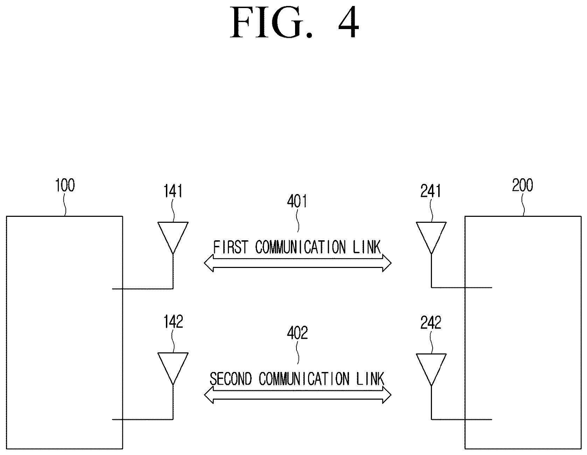

As described above, the processor 130 may perform the MIMO operation or the multi-link operation by combining the plurality of antennas. A description of the MIMO operation will be provided in detail in the description of FIG. 3, and a description of the multi-link operation will be provided in detail in the description of FIG. 4.

FIG. 3 is a diagram for describing the MIMO operation of the electronic apparatus according to one or more example embodiments of the present disclosure.

Referring to FIG. 3, the electronic apparatus 100 may perform a 2 x 2 MIMO operation with the external device 200 in the second frequency band by using two transmitting antennas 131 and 132 that may operate in the second frequency band.

Here, the "MIMO operation (MIMO)" may mean an operation in which the electronic apparatus 100 transmits the plurality of data to the external device 200 by using the plurality of antennas in one frequency band.

In order for the electronic apparatus 100 to transmit the plurality of data to the external device 200 and receive the plurality of data from the external device 200 through the MIMO operation, the external device 200 should also include two antennas 231 and 232 that may operate in the same second frequency band.

The electronic apparatus 100 may transmit the plurality of data to the external device based on the plurality of antennas by utilizing a spatial multiplexing technology. As illustrated in FIG. 3, the electronic apparatus 100 may transmit first data 301 to the first receiving antenna 231 of the external device 200 based on the first transmitting antenna 131, and may transmit second data 302 to the first receiving antenna 231 of the external device 200 based on the second transmitting antenna 132. In this case, the first data 301 and the second data 302 are data transmitted in the same frequency band, but since the first data 301 and the second data 302 are based on signals that are orthogonal to each other, the first data 301 and the second data 302 do not interfere with each other, and thus the first receiving antenna 231 may independently receive the first data 301 and the second data 302.

As described above, the electronic apparatus 100 may transmit the plurality of data to the external device 200 based on the MIMO operation using the plurality of antennas operating in the same second frequency band. Therefore, the electronic apparatus 100 may provide a high data transmission rate through the MIMO operation.

In the example of FIG. 3, the MIMO operation is performed in the second frequency band. but in other examples, the electronic apparatus 100 may perform the MIMO operation in various frequency bands, such as the first frequency band and the third frequency band.

FIG. 3 illustrates a 2 x 2 MIMO operation,, but in other examples, depending on the number of antennas included in the antenna module 110, the electronic apparatus 100 may perform various types of MIMO operations, such as performing a 16 x 16 MIMO operation.

The electronic apparatus 100 may perform not only the MIMO operation but also a multi-link operation, which will be described in detail in the description of FIG. 4.

FIG. 4 is a diagram illustrating a multi-link operation of the electronic apparatus according to one or more example embodiments of the present disclosure.

Referring to FIG. 4, the electronic apparatus 100 forms a first communication link 401 with the external device 200 based on the first link antenna 141, and forms a second communication link 402 with the external device 200 based on the second link antenna 142.

Here, the "multi-link operation" may mean an operation of transmitting or receiving data through the plurality of communication links. The electronic apparatus 100 may form the communication link with the external device 200 for each of the plurality of frequency bands through the multi-link operation, and may transmit or receive data through the formed communication links.

In the MIMO operation of the electronic apparatus 100, the electronic apparatus 100 may only transmit or receive data simultaneously based on the plurality of antennas, and may not transmit data based on only some of the plurality of antennas and receive data based on only some of the other remaining antennas. On the other hand, in the multi-link operation of the electronic apparatus 100, the electronic apparatus 100 may transmit data based on some of the plurality of communication links and receive data based on some of the other remaining communication links.

The first link antenna 141 and the first external antenna 241 are antennas for operation in the first frequency band, and the second link antenna 142 and the second external antenna 242 are antennas for operation in the second frequency band. In this case, the first communication link 401 formed based on the first link antenna 141 and the first external antenna 241 is a communication link corresponding to the first frequency band. In addition, the second communication link 402 formed based on the second link antenna 142 and the second external antenna 242 is a communication link corresponding to the second frequency band.

In this case, the signal of the first frequency band may be transmitted from the first link antenna 141 to the first external antenna 241 through the first communication link 401, and may also be transmitted from the first external antenna 241 to the first link antenna 141.

Since the first communication link 401 and the second communication link 402 are independent communication links, the electronic apparatus 100 may receive data based on the first communication link 401 while transmitting data based on the second communication link 402.

The electronic apparatus 100 may form a plurality of communication links based on a plurality of frequency bands with the external apparatus 200, thereby providing a high data transmission rate.

The MIMO operation and multi-link operation described in FIGS. 3 and 4 are possible only when there is an available antenna combination in the electronic apparatus 100. Therefore, it is essential for the electronic apparatus 100 to identify whether an antenna is faulty on its own and identify an antenna combination based only on the remaining antennas excluding the faulty antenna for stable data transmission and reception with the external apparatus 200.

The electronic apparatus 100 may identify whether the antenna is faulty based on the received signal strength value of each of the plurality of antennas included in the antenna module 110.

According to one or more example embodiments of the present disclosure, the electronic apparatus 100 identifies whether the antenna is faulty based on the reception status of each of the at least one first antenna, at least one second antenna, and at least one common antenna.

Here, the "reception status of the antenna" may mean the reception status of the signal being received by the antenna. For example, the "reception status of the antenna" may include information on a received signal strength indicator (RSSI) value of a signal being received by the antenna, a packet loss rate of a data packet received by the antenna, a signal-to-noise ratio (SNR) of a signal received by the antenna, etc.

In addition, the "reception status of the antenna" may be replaced with various expressions that represent the same/similar concepts. For example, it may be replaced with various expressions such as "signal reception status of antenna", "whether reception status of antenna is good", "whether reception signal of antenna is bad", "whether reception signal of antenna is faulty", "signal status of antenna", etc. However, in the present disclosure, they are referred to collectively as "reception status of antenna".

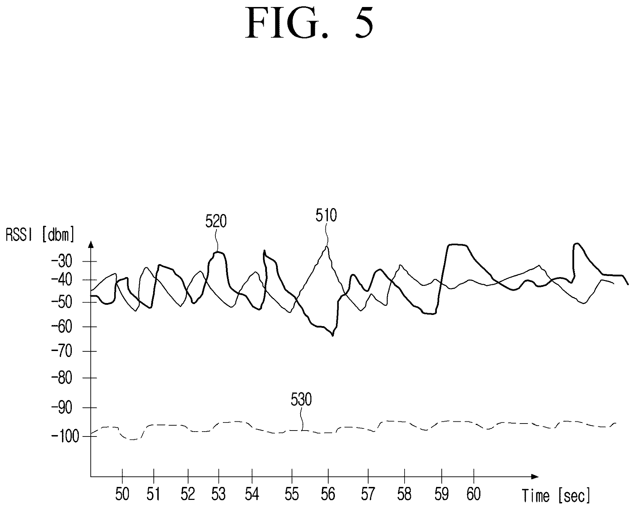

FIG. 5 is a graph illustrating example RSSI curves of a first antenna, a second antenna and a third antenna, which may be used by the electronic apparatus to identify whether an antenna of the electronic apparatus is faulty.

As illustrated in FIG. 5, the first RSSI curve 510 may be an RSSI curve of the first antenna included in the antenna module 110, the second RSSI curve 520 may be an RSSI curve of the second antenna, and the third RSSI curve 530 may be an RSSI curve of the common antenna.

The electronic apparatus 100 may identify an antenna that maintains the received signal strength indicator (RSSI) value in a preset range for a preset time among at least one first antenna, at least one second antenna, and at least one common antenna, and may identify the identified antenna as the faulty antenna.

Specifically, the preset time may be 4 seconds, and the received signal strength indicator value in the preset range may be -95 dbm or less and -105 dbm or more. In this case, the electronic apparatus 100 may identify an antenna in which the received signal strength indicator value is -95 dbm or less and -105 dbm or more for 4 seconds as a faulty antenna.

Referring to the plurality of RSSI curves 510, 520, and 530 illustrated in FIG. 5, the electronic apparatus 100 may identify the common antenna corresponding to the third RSSI curve 530 as the faulty antenna since the third RSSI curve 530 exists within a range of -95 dbm or less and -105 dbm or more for 4 seconds or more.

According to one or more example embodiments, the electronic apparatus 100 may identify an antenna, which maintains a signal-to-noise ratio value within a preset range for a preset time period, among at least one first antenna, at least one second antenna, and at least one common the antenna and may identify the identified the antenna as the faulty antenna. For example, the preset range may be set to include only signal-to-noise ratio values that are much smaller than the range of the signal-to-noise ratio value of an available non-faulty antenna.

According to one or more example embodiments, the electronic apparatus 100 may identify an antenna that maintains a packet loss rate value in a preset range for a preset time among at least one first antenna, at least one second antenna, and at least one common antenna, and may identify the identified the antenna as the faulty antenna. For example, the preset range may be set to include only packet loss rates that are much higher than the range of the packet loss rate of an available non-faulty antenna.

Here, the preset time and the preset range may be set to any value. For example, the preset time and the preset range may be values set by a user or a manufacturer based on experimental data.

According to one or more example embodiments, the electronic apparatus 100 may compare the received signal strength indicator values of at least one first antenna, at least one second antenna, and at least one common antenna, to identify the difference in the received signal strength indicator values for each antenna included in the electronic apparatus 100, and may identify the antenna, in which the representative value of the difference in the identified received signal strength indicator values is negative and is smaller than a preset value, as the faulty antenna.

For example, when the preset value is -50 dbm, the received signal strength indicator value of the first antenna is -42 dbm, the received signal strength indicator value of the second antenna is -47 dbm, and the received signal strength indicator value of the common antenna is -97 dbm, the difference in the received signal strength indicator values of each antenna may be expressed as shown in Table 2 below.

**[Table 2]**

| | Difference from first antenna | Difference from second antenna | Difference from common antenna | Represe ntative value of difference |
|---|---|---|---|---|
| First antenna | 0 | +5 | +55 | +30 |
| Second antenna | -5 | 0 | +50 | +22.5 |
| Common | -55 | -50 | 0 | -52.5 |
| antenna | | | | |

Table 2 includes the difference calculated by comparing the received signal strength indicator values of each of the first antenna, the second antenna, and the common antenna with the received signal strength indicator values of the other antennas of the first antenna, the second antenna and the common antenna, and the representative value of the calculated difference. Here, the representative value may be set as the mean value of the difference calculated for each antenna, or may be set as the median value of the difference. In other examples, the representative value may be set as a mode of the difference, and may be set based on various statistical values of the difference calculated by comparing with the received signal strength indicator values of other antennas.

In the example where the representative value of the difference is calculated as shown in Table 2, the electronic apparatus 100 may identify the common antenna, in which the representative value is negative and smaller than the preset value of -50 dbm, as the faulty antenna.

In addition, the electronic apparatus 100 may perform the method for identifying whether the antenna is faulty as described above at preset time intervals, and may identify the antenna in which the representative value is negative and smaller than the preset value for n consecutive times (n is a natural number greater than or equal to 2) as the faulty antenna.

According to another example embodiment, the electronic apparatus 100 may compare the signal-to-noise ratios of at least one first antenna, at least one second antenna, and at least one common antenna with each other, identify the difference in the signal-to-noise ratios for each antenna with respect to other antennas included in the electronic apparatus 100, and identify the antenna in which the representative value of the difference in the ratios is negative and smaller than a preset value as the faulty antenna.

According to another example embodiment, the electronic apparatus 100 may compare the packet loss rates of at least one first antenna, at least one second antenna, and at least one common antenna with each other, identify the difference in the packet loss rates for each antenna with respect to other antennas included in the electronic apparatus 100, and identify the antenna in which the difference in the loss rates is positive and larger than a preset value as the faulty antenna.

Whilst in the examples described, the antenna module 110 includes a first antenna, a second antenna, and a common antenna has been described, the faulty antenna may be identified according to the same methods in examples where the antenna module 110 includes more types and numbers of antennas, such as where the antenna module 110 additionally includes at least one third antenna.

Whilst various methods for identifying whether the electronic apparatus 100 is faulty have been described, it is possible for the electronic apparatus 100 to identify the faulty antenna by any combination of the plurality of methods.

For example, the electronic apparatus 100 may identify, as the faulty antenna, the antenna in which the representative value of the difference in the received signal strength indicator value is negative and smaller than a preset value while maintaining the received signal strength indicator value in a preset range for a preset time.

According to one or more example embodiments, the electronic apparatus 100 may perform the above-described operation for identifying whether the antenna is faulty at preset unit time intervals. For example, when the preset unit time interval is 0.5 seconds, the electronic apparatus 100 may identify the reception status of each of the plurality of antennas at 0.5 second intervals, and identify whether the antenna is faulty based on the reception status of each of the plurality of antennas.

According to another example embodiment, when it is identified that an external force greater than a threshold value is applied to the electronic apparatus 100 based on a sensing value of a sensor, the electronic apparatus 100 may identify whether an antenna is faulty based on the reception status of each of the at least one first antenna, the at least one second antenna, and the at least one common antenna.

In this example, the electronic apparatus 100 may further include a sensor. For example, the sensor may be a gyro sensor. The electronic apparatus 100 may detect a change in the rotation speed of the electronic apparatus 100 based on the sensing value of the gyro sensor, and when it is identified that the amount of change in the rotation speed exceeds the threshold value, it may identify that an external force greater than the threshold value is applied to the electronic apparatus 100.

As another example, the sensor may be an acceleration sensor. The electronic apparatus 100 may detect a change in acceleration of the electronic apparatus 100 based on the sensing value of the acceleration sensor, and when it is determined that the acceleration change amount exceeds the threshold value, it may be determined that an external force exceeding the threshold value is applied to the electronic apparatus 100.

Whilst examples have been described in which the sensor is implemented as a gyro sensor, a pressure sensor, and an acceleration sensor, according to other examples the sensor included in the electronic apparatus 100 may be implemented as various other types of sensors that may detect an impact applied to the electronic apparatus 100.

As described above, the electronic apparatus 100 detects whether an antenna is faulty based on the reception status of the antenna, and thus according to the electronic apparatus 100 of the present disclosure, the user does not have to directly check whether the antenna module 110 is faulty.

The electronic apparatus 100 may detect the faulty antenna by the above method, and identify the available antenna combination based on the remaining antennas except for the faulty antenna, and the method of identifying the available antenna combination will be described in detail in the description of FIGS. 6 to 8 described below.

FIG. 6 is a diagram for describing a method for identifying an available antenna combination of an electronic apparatus according to one or more example embodiments of the present disclosure.

Referring to FIG. 6, the electronic apparatus 100 may identify an available antenna combination 620 based on antenna combination information 610 including first ranking information generated based on performance differences between antennas in a first frequency band (e.g., 5 GHz band) and second ranking information generated based on performance differences between antennas in a second frequency band (e.g., 6 GHz band).

In the present disclosure, the "ranking information generated based on performance differences between antennas" may mean ranking information generated by assigning a high rank to an antenna with relatively good radiation characteristics and a low rank to an antenna with relatively bad radiation characteristics. For example, the "ranking information generated based on performance differences between antennas" may include ranking information generated by allowing the electronic apparatus 100 to compare antenna gains of each of the plurality of antennas to assign a high rank to an antenna with relatively large antenna gain and a low rank to an antenna with relatively small antenna gain.

The performance differences between each of the plurality of antennas as described above may be calculated for each frequency band.

In the example shown in FIG. 6, the antenna module 110 has antenna 1, antenna 2, antenna 3, antenna 4, antenna 5, antenna A, antenna B, and antenna C. According to an example, antenna 1 has an antenna gain of 20 dB in the 5 GHz band (5.180 GHz to 5.850 GHz), the antenna 2 has an antenna gain of 10 dB in the 5 GHz band, the antenna 3 has an antenna gain of 5 dB in the 5 GHz band, the antenna 4 has an antenna gain of 3 dB in the 5 GHz band, and the antenna 5 has an antenna gain of 2 dB in the 5 GHz band. In this example, the antenna 1, which has the largest antenna gain in the 5 GHz band, is determined as a first rank, the antenna 2, which has the next largest antenna gain, is determined as a second rank, the antenna 3 is determined as a third rank, the antenna 4 is determined as a fourth rank, and antenna 5 is determined as a fifth rank. That is, the electronic apparatus 100 may generate the first ranking information in the first frequency band (5GHz band) as "first rank: antenna 1, second rank: the antenna 2, third rank: the antenna 3, fourth rank: the antenna 4, and fifth rank: antenna 5".

According to the same example method, the electronic apparatus 100 may compare the antenna gains of each of the plurality of antennas in the 6GHz band (5.925GHz to 7.125GHz) to determine that the antenna A, which has the largest antenna gain in the 6GHz band, is the first rank, antenna B, which has the next largest antenna gain, is the second rank, antenna C is the third rank, the antenna 3 is the fourth rank, and the antenna 4 is the fifth rank. In this example, the electronic apparatus 100 may generate the second ranking information in the second frequency band (6GHz band) as "first rank 1: the antenna A, second rank: antenna B, third rank: antenna C, fourth rank: the antenna 3, fifth rank: the antenna 4".

According to one or more example embodiments, the electronic apparatus 100 may generate the first ranking information in the first frequency band by comparing the antenna gains of each of the plurality of antennas in the first frequency band to assign a high ranking to an antenna having a relatively large antenna gain and a low ranking to an antenna having a relatively small antenna gain. The electronic apparatus 100 may also generate the second ranking information in the second frequency band by comparing the antenna gains of each of the plurality of antennas in the second frequency band to assign a high ranking to an antenna having a relatively large antenna gain and a low ranking to an antenna having a relatively small antenna gain.

According to another example embodiment, the "ranking information generated based on the performance differences for each antenna" may include the ranking information generated by allowing the electronic apparatus 100 to compare S11 values of S-parameters of each of the plurality of antennas to assign a high rank to an antenna having a relatively small S11 value and a low rank to an antenna having a relatively large S11 value.

For example, when the average value of S11 in the 5 GHz band (5.180 GHz to 5.850 GHz) of the antenna 1 is -20 dB, the average value of S11 in the 5 GHz band of the antenna 2 is -15 dB, the average value of S11 in the 5 GHz band of the antenna 3 is -10 dB, the average value of S11 in the 5 GHz band of the antenna 4 is -5 dB, and the average value of S11 in the 5 GHz band of the antenna 5 is -2 dB, the antenna 1 with the smallest S11 value in the 5GHz band may be determined as the first rank, the antenna 2 with the next smallest S11 value may be determined as the second rank, the antenna 3 may be determined as the third rank, the antenna 4 may be determined as the fourth rank, and the antenna 5 may be determined as the fifth rank. That is, the electronic apparatus 100 may generate the first ranking information in the first frequency band (5GHz band) as "first rank 1: antenna 1, second rank: the antenna 2, third rank: the antenna 3, fourth rank: the antenna 4, and fifth rank: antenna 5".

According to the same example, the electronic apparatus 100 may compare the average value of S11 in the 6GHz band (5.925GHz ~ 7.125GHz) of each of the plurality of antennas, and determine that the antenna A with the smallest S11 value in the 6GHz band may be determined as the first rank, the antenna B with the next smallest S11 value may be determined as the second rank, the antenna C may be determined as the third rank, the antenna 3 may be determined as the fourth rank, and the antenna 4 may be determined as the fifth rank. In this example, the electronic apparatus 100 may generate the second ranking information in the second frequency band (6GHz band) as "first rank 1: the antenna A, second rank: antenna B, third rank: antenna C, fourth rank: the antenna 3, fifth rank: the antenna 4".

Whilst examples have been described in which the electronic apparatus 100 may generate the antenna combination information including ranking information by comparing the S11 values of each of the plurality of antennas, in other examples, the electronic apparatus may identify the performance differences between antennas based on other S-parameters such as S21, S12, and S22 and generate the ranking information based on the performance differences of the identified antennas.

The electronic apparatus 100 may identify the performance differences between the antennas based on the reception status of the antenna. According to one or more example embodiments, the electronic apparatus 100 may generate the first ranking information in the first frequency band by comparing the reception status of each of the plurality of antennas in the first frequency band to assign a high ranking to an antenna having a relatively good reception status and a low ranking to an antenna having a relatively bad reception status. The electronic apparatus 100 may generate the second ranking information in the second frequency band by comparing the reception status of each of the plurality of antennas in the second frequency band to assign a high ranking to an antenna with a relatively good reception status and a low ranking to an antenna with a relatively bad reception status.

For example, the electronic apparatus 100 may generate the ranking information in each frequency band by comparing received signal strength indicator values in each frequency band for each of the plurality of antennas to assign a high ranking to an antenna with a relatively large received signal strength indicator value and a low ranking to an antenna with a relatively small received signal strength indicator value.

As another example, the electronic apparatus 100 may generate the ranking information in each frequency band by comparing packet loss rate in each frequency band for each of the plurality of antennas to assign a high ranking to an antenna with a relatively small packet loss rate and a low ranking to an antenna with a relatively large packet loss rate.

As another example, the electronic apparatus 100 may generate the ranking information in each frequency band by comparing signal-to-noise ratios of the plurality of antennas in each frequency band to assign a high rank to an antenna having a relatively high signal-to-noise ratio and assign a low rank to an antenna having a relatively low signal-to-noise ratio.

In the above description, examples in which the electronic apparatus 100 generates the ranking information of the antennas based on one of the S-parameters of the antenna, the antenna gain, and the reception status of antenna have been described, but according to other examples the electronic apparatus 100 may generate the ranking information in each frequency band of the plurality of antennas based on any combination of the S-parameters of the antenna, the antenna gain, and the reception status of the antenna.

The electronic apparatus 100 may store the antenna combination information 610 including the first ranking information and the second ranking information generated by the above-described method in the memory 120. When the faulty antenna is identified, the electronic apparatus 100 may identify the available antenna combination 620 excluding the antenna combination including the faulty antenna based on the antenna combination information 610.

According to one or more example embodiments, when a solid-state antenna is identified, the electronic apparatus 100 may identify the available antenna combination 620 based on the first ranking information and the second ranking information.

For example, when the electronic apparatus 100 identifies that the antenna 1 is in the fault state, the available antenna combination 620 may be identified based on the antenna having the relatively high ranking among the antennas excluding the antenna 1 based on the first ranking information.

In the example shown in FIG. 6, since two antennas are required for communication in the 5GHz band for 5GHz 2 x 2 MIMO operation, the electronic apparatus 100 may identify a combination of the antenna 2 with the second rank and the antenna 3 with the third rank as an antenna combination to be used for 5GHz 2 x 2 MIMO operation based on the first ranking information.

Since the two antennas for communication in the 6GHz band are required for 6GHz 2x2 MIMO operation, the electronic apparatus 100 may identify a combination of the antenna A with the first rank and the antenna B with the second rank as an antenna combination to be used for 6GHz 2x2 MIMO operation based on the second ranking information.

Since one antenna for communication in the 5GHz band and one antenna for communication in the 6GHz band are required for 5GHz + 6GHz multi-link operation, the electronic apparatus 100 may identify a combination of the antenna 2 and the antenna A as the antenna combination to be used for 5GHz + 6GHz multi-link operation based on the first ranking information and the second ranking information.

According to one or more example embodiments, when the electronic apparatus 100 identifies the solid-state antenna as the antenna used for communication in the first frequency band with the external device 200, the electronic apparatus 100 may identify the available antenna combination by checking whether an antenna is available in order from the highest-ranking antenna to the lowest-ranking antenna based on the first ranking information.

For example, the electronic apparatus 100 may be performing communication with the external device 200 based on 5GHz + 6GHz multi-link operation, using the antenna 1 to form the communication link in the 5GHz band and using the antenna A to form the communication link in the 6GHz band. When the electronic apparatus 100 identifies that the antenna 1 used for communication in the 5GHz band is in the fault state, the electronic apparatus 100 may check whether the antennas from the first rank to the fifth rank are available based on the first ranking information. In this example, since the antenna 1, which is the antenna with the first rank, is in the fault state, the electronic apparatus 100 may identify the antenna 2, which is the antenna with the second rank, as the antenna to be used for communication in the 5GHz band, and may perform communication based on 5GHz + 6GHz multi-link operation with the external device 200 by combining the antenna 2 and the antenna A.

According to one or more example embodiments, when the electronic apparatus 100 identifies the solid-state antenna as the antenna used for communication in the second frequency band with the external device 200, the electronic apparatus 100 may identify the available antenna combination by checking whether an antenna is available in order from the highest-ranking antenna to the lowest-ranking antenna based on the second ranking information.

For example, the electronic apparatus 100 may be performing communication with the external device 200 based on a 6 GHz 2 x 2 MIMO operation and using the antenna A and the antenna B for the 6 GHz 2 x 2 MIMO operation. When the electronic apparatus 100 identifies that the antenna A used for communication in the 6GHz band is in the fault state, the electronic apparatus 100 may check whether the antennas from the first rank to the fifth rank are available based on the second ranking information. In this example, since the antenna A, which is the antenna with the first rank, is in the fault state, the electronic apparatus 100 may identify the antenna B, which is the antenna with the second rank, as the antenna to be used for communication in the 6GHz band, and may perform communication based on 5GHz + 6GHz multi-link operation with the external device 200 by combining the antenna 1 and the antenna B.

As described above, the electronic apparatus 100 may control the antenna module 110 to immediately identify the available antenna combination and communicate with the external device 200 based on the available antenna combination through the first ranking information and the second ranking information generated based on the performance differences of the antennas for each frequency. The electronic apparatus may thereby maintain stable communication with the external device 200.

In the description of the above-described FIG. 6, the antenna 1 and the antenna 2 may correspond to the first antenna operating in the first frequency band, the antenna A, the antenna B, and the antenna C may correspond to the second antenna operating in the second frequency band, and the antenna 3 and the antenna 4 may correspond to the common antenna selectively operating in the first frequency band and the second frequency band.

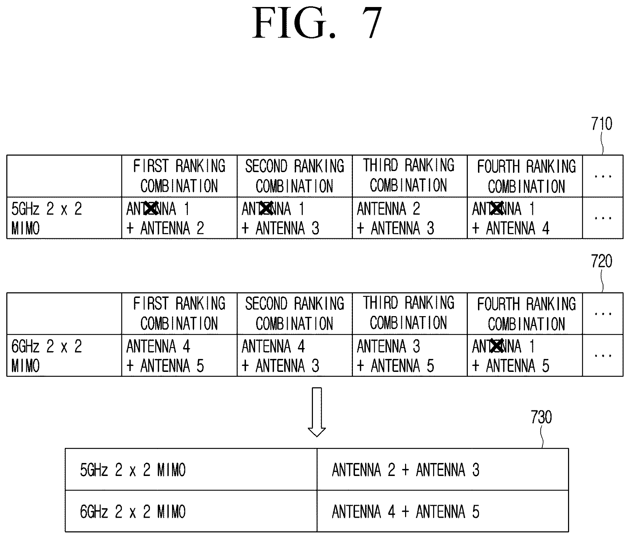

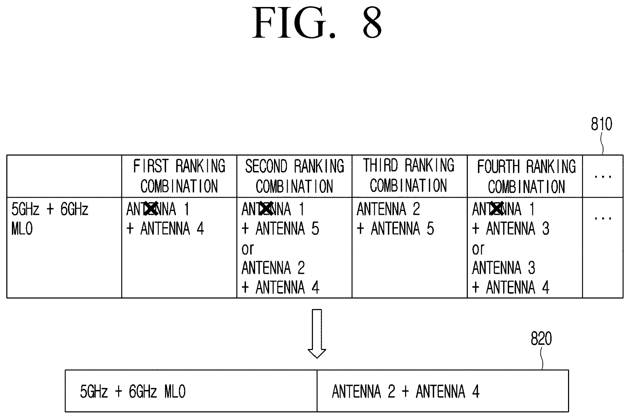

The electronic apparatus 100 according to the present disclosure may generate the ranking information of the antenna combinations for each operation mode, which will be described in detail in the description of FIGS. 7 and 8 described below.

FIG. 7 is a diagram for describing the method for identifying an available antenna combination of an electronic apparatus according to one or more example embodiments of the present disclosure.

Referring to FIG. 7, the electronic apparatus 100 may identify an available antenna combination 730 based on first MIMO ranking information 710 generated based on the performance differences among the plurality of antenna combinations for the MIMO operations (e.g., 5 GHz 2 x 2 MIMO) in the first frequency band and second MIMO ranking information 720 generated based on the performance differences among the plurality of antenna combinations for the MIMO operations (e.g., 6 GHz 2 x 2 MIMO) in the second frequency band.

Here, the "MIMO ranking information generated based on performance differences among antenna combinations" may mean the ranking information generated by the electronic apparatus 100 by assigning a high ranking to an antenna combination having relatively good radiation characteristics in the MIMO operation mode and assigning a low ranking to an antenna combination having relatively bad radiation characteristics in the MIMO operation mode.

In the description of FIGS. 7 and 8, the antenna module 110 includes the antenna 1, the antenna 2, the antenna 3, the antenna 4, and the antenna 5.

According to one or more example embodiments, when the solid-state antenna is identified as the antenna used for the MIMO operation in the first frequency band, the electronic apparatus 100 may identify an antenna combination for the MIMO operation in the first frequency band based on the first MIMO ranking information 710.

Specifically, the electronic apparatus 100 may identify the antenna combination with the highest rank among the antenna combinations excluding the combination including the faulty antenna based on the first MIMO ranking information 710.

For example, the electronic apparatus 100 uses a combination of the antenna 1 and the antenna 2 to perform the communication based on a 5GHz 2 x 2 MIMO operation with the external device 200. In this example, when the electronic apparatus 100 identifies that the antenna 1 is in the fault state, the electronic apparatus 100 may identify a third ranking combination (antenna 2 + antenna 3) as the highest ranking combination, excluding the antenna combination including the antenna 1, based on the first MIMO ranking information. The electronic apparatus 100 may perform communication based on the 5GHz 2 x 2 MIMO operation with the external device 200 based on the third ranking combination.

According to another example embodiment, when the solid-state antenna is identified as the antenna used for the MIMO operation in the second frequency band, the electronic apparatus 100 may identify an antenna combination for the MIMO operation in the second frequency band based on the second MIMO ranking information 720.

Specifically, the electronic apparatus 100 may identify the antenna combination with the highest rank among the antenna combinations excluding the combination including the faulty antenna based on the second MIMO ranking information 720.

For example, the electronic apparatus 100 uses a combination of the antenna 4 and the antenna 5 to perform the communication based on a 6GHz 2 x 5 MIMO operation with the external device 200. In this example, when the electronic apparatus 100 identifies that the antenna 4 is in the fault state, the electronic apparatus 100 may identify the third ranking combination (antenna 3 + antenna 5) as the highest ranking combination, excluding the antenna combination including the antenna 4, based on the second MIMO ranking information. The electronic apparatus 100 may perform communication based on the 6GHz 2 x 2 MIMO operation with the external device 200 based on the third ranking combination.

As described above, the electronic apparatus 100 stores information on the ranking of the antenna combinations for each of the plurality of MIMO operation modes, so that even when the faulty antenna is an antenna used for communication based on the MIMO operation, it may quickly identify an alternative antenna combination to maintain stable communication with the external device.

The electronic apparatus 100 according to the present disclosure may generate the ranking information of the antenna combinations for performing the multi-link operation mode, which will be described in detail in the description of FIG. 8 below.

FIG. 8 is a diagram for describing the method for identifying an available antenna combination of an electronic apparatus according to one or more example embodiments of the present disclosure.

Referring to FIG. 8, the electronic apparatus 100 may identify an available antenna combination 820 based on multi-link ranking information 810 generated based on the performance differences among the plurality of antenna combinations for forming the first communication link in the first frequency band and the second communication link in the second frequency band.

Here, the "multi-link ranking information generated based on performance differences among antenna combinations" may mean the ranking information generated by allowing the electronic apparatus 100 to assign a high ranking to an antenna combination having relatively good radiation characteristics in the MIMO operation mode and assigning a low ranking to an antenna combination having relatively bad radiation characteristics in the MIMO operation mode.

According to one or more example embodiments, the electronic apparatus 100 may identify an antenna combination for forming a multi-link based on the multi-link ranking information 810 when the solid-state antenna is identified as the antenna used for forming the first communication link or the second communication link.

Specifically, the electronic apparatus 100 may identify an antenna combination by checking whether the multi-link formation is possible in order from the antenna combination of the highest-ranking antenna to the lowest-ranking antenna based on the multi-link ranking information 810.

For example, the electronic apparatus 100 may be using a combination of the antenna 1 and the antenna 4 to perform communication based on 5 GHz + 6 GHz multi-link operation with the external device 200. In this example, when the electronic apparatus 100 identifies that the antenna 1 is in the fault state, the electronic apparatus 100 may identify the second ranking combination (the antenna 2 + the antenna 4), which is the highest ranking combination, excluding an antenna combination including the antenna 1 based on the multi-link ranking information 810. The electronic apparatus 100 may perform communication based on the second ranking combination and the external device 200 based on the 5GHz + 6GHz multi-link operation.

As illustrated in FIG. 8, there may be a plurality of antenna combinations with the same ranking. When all of the plurality of antenna combinations with the same ranking are available antenna combinations, the electronic apparatus 100 may arbitrarily select one combination and perform communication based on the multi-link operation with the external device 200 based on the selected combination.

As described above, the electronic apparatus 100 stores information on the ranking of the antenna combinations for each of the MIMO operation modes, so that even when a faulty antenna is an antenna used for communication based on the multi-link operation, it may quickly identify the replaceable antenna combination to maintain stable communication with the external device.

In the examples described in relation to FIGS. 7 and 8, the antenna 1 and the antenna 2 may correspond to the first antenna operating in the first frequency band (5 GHz band), the antenna 4 and the antenna 5 may correspond to the second antenna operating in the second frequency band (6 GHz band), and the antenna 3 may correspond to a common antenna selectively operating in the first frequency band (5 GHz band) and the second frequency band (6 GHz band).

According to the examples described in relation to FIGS. 6 to 8, the electronic apparatus 100 may perform the communication with the external device 200 only based on the 5GHz 2 x 2 MIMO operation, the 6GHz 2 x 2 MIMO operation, and the 5GHz + 6GHz multi-link operation, but according to other examples, depending on the number and performance of antennas included in the antenna module 110, the electronic apparatus 100 may perform the communication with the external device 200 based on various operation modes such as the 2.4GHz 2 x 2 MIMO operation, the 2.4GHz + 5GHz + 6GHz multi-link operation, and the 5GHz 8 x 8 MIMO operation, and may also identify the available antenna combinations for each of the various operation modes.

In the examples described in relation to FIGS. 6 to 8, an available antenna combination is identified based on the antenna combination information in the case where one faulty antenna is identified by the electronic apparatus 100, but in other examples, the same method may be used in identifying an available antenna combination where two or more faulty antennas are identified.

For example, when the electronic apparatus 100 identifies that the antenna 1 and the antenna 4 are in the fault state, the antenna combination with the highest rank among the plurality of antenna combinations excluding the antenna 1 and the antenna 4 may be identified based on the antenna combination information.

In the description of FIG. 6 described above, the method for identifying an available antenna combination based on ranking information generated based on performance differences for each antenna was described, in the description of FIG. 7, the method for identifying an available antenna combination based on MIMO ranking information generated based on performance differences for each antenna combination was described, and in the description of FIG. 8, the method for identifying an available antenna combination based on multi-link ranking information generated based on performance differences for each antenna combination was described as a separate method, but this is only for convenience of description, and in other examples, the electronic apparatus 100 may identify the available antenna combination by combining each method.

The electronic apparatus 100 may identify the available antenna combination based on the above-described methods. The electronic apparatus 100 may select one antenna combination from among the available antenna combinations and control the antenna module 110 to perform the communication with the external device 200 using the selected antenna combination. A method of controlling the antenna module 110 to perform the communication with the external device 200 using the selected antenna combination by the electronic apparatus 100 will be described in detail in the description of FIG. 9 below.

FIG. 9 is a diagram for describing a method of controlling an antenna module of an electronic apparatus according to one or more example embodiments of the present disclosure.

Referring to FIG. 9, the electronic apparatus 100 may identify one antenna combination among the available antenna combinations and control the antenna module 110 to communicate with the external device 200 based on the identified one antenna combination.
As illustrated in FIG. 6, the available antenna combination 620 may include a first combination for performing the MIMO operation in the first frequency band (e.g., a 5 GHz band), a second combination for performing the MIMO operation in the second frequency band (e.g., a 6 GHz band), and a third combination for performing a multi-link operation (e.g., a 5 GHz + 6 GHz multi-link operation).

The electronic apparatus 100 may identify one of the first combination, the second combination, and the third combination based on interference information of the communication environment and required bandwidth information for data transmission and reception with the external device 200.

The electronic apparatus 100 may monitor a frequency spectrum in the communication environment around the electronic apparatus 100 through spectrum analysis. The electronic apparatus 100 may identify a frequency band with severe frequency interference based on the monitoring result.

According to one or more example embodiments, when the electronic apparatus 100 identifies that the degree of frequency interference in the 5 GHz band in the surrounding communication environment exceeds a threshold value, the antenna module 110 may be controlled to perform the communication with the external device 200 based on the second combination for performing the MIMO operation in the 6 GHz band.

According to another example embodiment, when the electronic apparatus 100 identifies that the degree of frequency interference in the 5 GHz and 6 GHz bands in the surrounding communication environment exceeds a threshold value, the antenna module 110 may be controlled to perform the communication with the external device 200 based on the third combination for performing the 5 GHz+ 6 GHz multi-link operation.

When the electronic apparatus 100 requires a bandwidth of 320 MHz for transmitting and receiving data to and from the external device 200, the frequency band that may provide a bandwidth of 320 MHz is a 6 GHz frequency band. Therefore, the electronic apparatus 100 may control the antenna module 110 to perform the communication with the external device 200 based on the second combination for performing the MIMO operation in the 6 GHz band, or may control the antenna module 110 to perform the communication with the external device 200 based on the third combination for performing the 5 GHz + 6 GHz multi-link operation.

As described above, the electronic apparatus 100 may identify one antenna combination among at least one antenna combination included in the available antenna combination based on the interference information of the communication environment and the information on the required bandwidth for transmitting and receiving data to and from the external device 200.

As illustrated in FIG. 9, the antenna module 110 may include an RFIC 910, a first switch 920-1, a second switch 920-2, a first filter 930-1, a second filter 930-2, a third filter 930-3, a first antenna 940-1, a common antenna 940-2, and a second antenna 940-3.

As described in relation to FIG. 2, the RFIC 910 may receive a signal generated by the processor 130 and convert the received signal into signals of the first frequency band and/or the second frequency band.

The first switch 920-1 and the second switch 920-2 may change a path of the signal transmitted from the RFIC 910 to the antenna side. The first switch 920-1 and the second switch 920-2 may be implemented as SPDT, DPDT, etc.

The first filter 930-1, the second filter 930-2, and the third filter 930-3 may distinguish the signal that has traveled along the path for each frequency band. In this case, the first filter 930-1, the second filter 930-2, and the third filter 930-3 may be implemented as a duplexer, a diplexer, etc.

The electronic apparatus 100 may control the antenna module 110 to communicate with the external device 200 based on one antenna combination identified from the available antenna combinations. Specifically, the electronic apparatus 100 may control the first switch 920-1 and the second switch 920-2 to change the path of the signal according to the identified antenna combination.

According to the example in FIG, 9, the electronic apparatus 100 performs communication based on the multi-link operation forming the plurality of communication links in the first frequency band and the second frequency band using the first antenna 940-1 and the second antenna 940-3. When the first antenna 940-1 is identified to be faulty, the electronic apparatus 100 may identify a combination of available antennas including a combination of the common antenna 940-2 and the second antenna 940-3 for performing the multi-link operation and a combination of the common antenna 940-2 and the second antenna 940-3 for performing a 2 x 2 MIMO operation in the second frequency band.

When the electronic apparatus 100 selects a combination of the common antenna 940-2 and the second antenna 940-3 for performing the multi-link operation, the electronic apparatus 100 may change the path of the signal so that the signal of the first frequency band is transmitted toward the common antenna 940-2 and the signal of the second frequency band is transmitted toward the second antenna 940-3. In this case, the electronic apparatus 100 may change the path of the signal by controlling the first switch 920-1 and the second switch 920-2.

When the electronic apparatus 100 selects a combination of the common antenna 940-2 and the second antenna 940-3 for performing the 2 x 2 MIMO operation in the second frequency band, the electronic apparatus 100 may change the path of the signal so that an independent signal of the second frequency band is transmitted toward the common antenna 940-2 and the second antenna 940-3. In this case, the electronic apparatus 100 may change the path of the signal by controlling the first switch 920-1 and the second switch 920-2.

Whilst FIG. 9 illustrates an example in which the electronic apparatus 100 changes the path of the signal by controlling the first switch 920-1 and the second switch 920-2 to enable the use of the selected antenna combination, according to other examples, the electronic apparatus 100 may control the RFIC 910 not to transmit the signal converted into the first frequency band but only transmit the signal converted into the second frequency band, or control the plurality of filters 930-1, 930-2, and 930-3 not to pass the signal of the first frequency band but only pass the signal of the second frequency band, thereby changing the frequency band of the signal reaching the antenna side by controlling the RFIC 910 and the plurality of filters 930-1, 930-2, and 930-3 in various ways.

The configuration of the antenna module 110 illustrated in FIG. 9 is merely exemplary, and the antenna module 110 may include various components such as a power amplifier module and a power supply device.

Referring to the description of FIGS. 1 to 9 described above, even when a faulty antenna is identified while performing the wireless communication with the external device 200, the electronic apparatus 100 may quickly identify an alternative antenna combination that may maintain the stable communication with the external device 200 based on the antenna combination information pre-stored in the electronic apparatus 100, and may perform the communication with the external device based on the alternative antenna combination only with simple control of the antenna module 110. Therefore, the electronic apparatus 100 according to one or more example embodiments of the present disclosure may perform uninterrupted data transmission and reception with the external device 200.

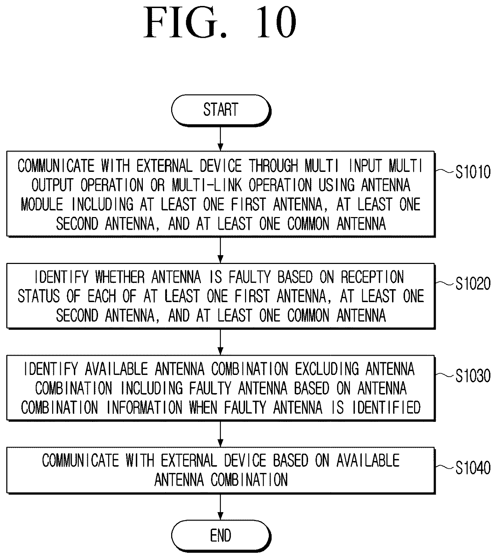

FIG. 10 is a flowchart for describing a method of communicating with an external device of an electronic apparatus according to one or more embodiments of the present disclosure.

Referring to FIG. 10, the electronic apparatus 100 communicates with the external device through the MIMO operation or the multi-link operation by using the antenna module including at least one first antenna, at least one second antenna, and at least one common antenna (S1010).

Next, the electronic apparatus 100 identifies whether the antenna is faulty based on the reception status of each of the at least one first antenna, at least one second antenna, and at least one common antenna (S1020).

Subsequently, the electronic apparatus 100 identifies the available antenna combination excluding the antenna combination including the faulty antenna based on the antenna combination information when the faulty antenna is identified (S1030).

According to one or more example embodiments, the antenna combination information may include the first ranking information generated based on the performance difference between each antenna in the first frequency band and the second ranking information generated based on the performance difference between each antenna in the second frequency band.

In this case, the electronic apparatus 100 may identify the available antenna combination based on the first ranking information and the second ranking information.

Specifically, when the electronic apparatus 100 identifies the solid-state antenna as the antenna used for the communication with the external device in the first frequency band, the electronic apparatus 100 may identify the available antenna combination by checking whether an antenna is available in order from the antenna of the highest-ranking antenna to the antenna of the lowest-ranking antenna based on the first ranking information. When the electronic apparatus identifies a faulty antenna as the antenna used for communication with the external device in the second frequency band, the electronic apparatus may identify the available antenna combination by checking whether an antenna is available in order from the antenna of the highest-ranking antenna to the antenna of the lowest-ranking antenna based on the second ranking information.

According to another example embodiment, the antenna combination information may include the first MIMO ranking information and the second MIMO ranking information. The first MIMO ranking information may be the ranking information generated based on the performance difference between the plurality of antenna combinations for the MIMO operation in the first frequency band, and the second MIMO ranking information may be the ranking information generated based on the performance difference between the plurality of antenna combinations for the MIMO operation in the second frequency band.

In this example, when the electronic apparatus 100 identifies the faulty antenna as the antenna used for the MIMO operation in the first frequency band, the electronic apparatus 100 may identify the antenna combination for the MIMO operation in the first frequency band based on the first MIMO ranking information. When the electronic apparatus 100 identifies the faulty antenna as the antenna used for the MIMO operation in the second frequency band, the electronic apparatus 100 may identify the antenna combination for the MIMO operation in the second frequency band based on the second MIMO ranking information.

According to another example embodiment, the antenna combination information may include the multi-link ranking information generated based on the performance difference of the plurality of antenna combinations forming the first communication link with the external device in the first frequency band and the second communication link with the external device in the second frequency band.

In this case, when the electronic apparatus 100 identifies that the faulty antenna is the antenna used for forming the first communication link or the second communication link, the electronic apparatus 100 may identify one antenna combination by checking whether the multi-link formation is possible in order from the antenna combination of the highest-ranking antenna to the lowest-ranking antenna based on the multi-link ranking information.

Next, the electronic apparatus 100 communicates with the external device based on the available antenna combination (S1040).

According to one or more example embodiments, the available antenna combination may include the first combination for performing the MIMO operation in the first frequency band, the second combination for performing the MIMO operation in the second frequency band, and the third combination for performing the multi-link operation.

In this case, the electronic apparatus 100 may identify one of the first combination, the second combination, and the third combination based on the interference information of the communication environment and the required bandwidth information for data transmission and reception to and from the external device, and may communicate with the external device based on the identified one combination.

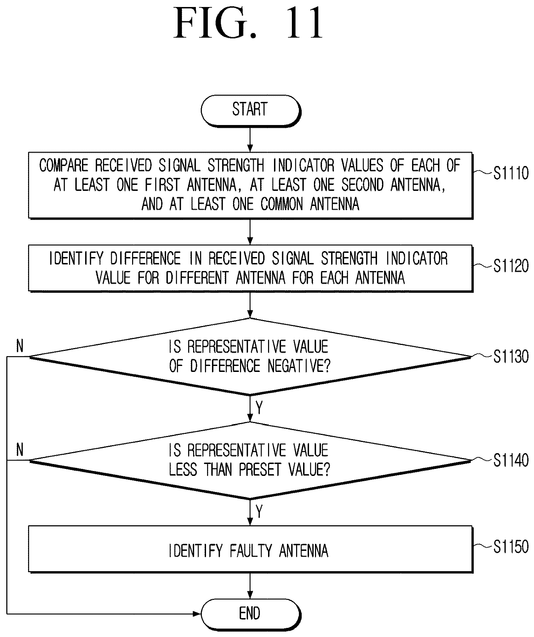

The electronic apparatus 100 may perform stable wireless communication with the external device even when the faulty antenna is identified by performing the above-described operation. The method for identifying the faulty antenna will be described in detail in the description of the flowchart of FIG. 11.

FIG. 11 is a flowchart for describing a method of identifying whether an antenna of an electronic apparatus is faulty according to one or more example embodiments of the present disclosure.

Referring to FIG. 11, the electronic apparatus 100 may compare received signal strength indicator values of at least one first antenna, at least one second antenna, and at least one common antenna with each other (S1110).

For example, when the electronic apparatus 100 identifies that an external force greater than the threshold value is applied to the electronic apparatus 100 based on the sensing value of the sensor, the electronic apparatus 100 may identify whether the antenna is faulty based on the reception status (e.g., the received signal strength indicator value) of each of the at least one first antenna, at least one second antenna, and at least one common antenna.

Next, the electronic apparatus 100 may identify the difference in the received signal strength indicator values for different antennas for each antenna (S1120).

Next, the electronic apparatus 100 may identify the representative value of the difference and identify whether the representative value of the difference is negative (S1130). Here, the representative value may be set as the mean value, the median value, or the mode of the plurality of differences.

Next, when the representative value of the difference is negative (S1130:Y), the electronic apparatus 100 may identify whether the representative value of the difference is less than a preset value (S1140).

Next, when the representative value of the difference is less than the preset value (S1140:Y), the electronic apparatus 100 may identify the antenna in which the representative value of the difference is negative and the representative value of the difference is less than the preset value as a faulty antenna (S1150).

According to another example embodiment, the electronic apparatus 100 may identify the antenna that maintains the received signal strength indicator value within the preset range for the preset time among at least one first antenna, at least one second antenna, and at least one common antenna, and may identify the identified antenna as a faulty antenna.

As described above, the electronic apparatus 100 may identify whether the antenna is faulty based on the reception status of each of the plurality of antennas, identifying the faulty antenna without checking whether the user directly inspects the abnormalities of the antenna or the communication circuit. Various methods described in FIGS. 10 and 11 may be performed by the electronic apparatus having the configuration illustrated in FIG. 2, but are not necessarily limited thereto, and may be performed by the electronic apparatus having various configurations.

Meanwhile, in FIGS. 10 and 11, the order of all steps is mapped for convenience of description, but of course, the order of steps that are unrelated to the order or can be performed in parallel is not necessarily limited to that order.

Meanwhile, the above-described methods according to at least some of various example embodiments of the present disclosure may be implemented in a form of application that may be installed in the existing electronic apparatus.

In addition, the above-described methods according to at least some of various example embodiments of the present disclosure may be implemented only by software upgrade or hardware upgrade of the existing electronic apparatus.

Further, the above-described methods according to at least some of various example embodiments of the present disclosure can also be performed through an embedded server included in the electronic apparatus or an external server of at least one of the electronic apparatus.

Meanwhile, according to an example embodiment of the disclosure, various example embodiments described above may be implemented by software including instructions stored in a machine-readable storage medium (for example, a computer-readable storage medium). A machine (for example, a computer) may be an apparatus that invokes the stored instruction from the storage medium and may be operated depending on the invoked instruction, and may include the electronic apparatus (for example, the electronic apparatus A) according to the disclosed embodiments. When the instruction is executed by a processor, the processor may perform the function corresponding to the instruction directly or by using other components under the control of the processor. The command may include codes created or executed by a compiler or an interpreter. The machine-readable storage medium may be provided in a form of a non-transitory storage medium. Here, the "non-transitory storage medium" means that the storage medium is a tangible device, and does not include a signal (for example, electromagnetic waves), and the term does not distinguish between the case where data is stored semi-permanently on a storage medium and the case where data is temporarily stored thereon. For example, the "non-transitory storage medium" may include a buffer in which data is temporarily stored. According to an example embodiment, the methods according to various example embodiments disclosed in the present document may be included and provided in a computer program product. The computer program product may be traded as a product between a seller and a purchaser. The computer program product may be distributed in the form of a machine-readable storage medium (for example, compact disc read only memory (CD-ROM)), or may be distributed (for example, download or upload) through an application store (for example, Play StoreTM) or may be directly distributed (for example, download or upload) between two user devices (for example, smartphones) online. In a case of the online distribution, at least some of the computer program products (for example, downloadable app) may be at least temporarily stored in a machine-readable storage medium such as a memory of a server of a manufacturer, a server of an application store, or a relay server or be temporarily created.

The diverse example embodiments of the disclosure may be implemented by software including instructions stored in a machine-readable storage medium (for example, a computer-readable storage medium). A machine (for example, a computer) may be an apparatus that invokes the stored instruction from the storage medium and may be operated depending on the invoked instruction, and may include the electronic apparatus (for example, the electronic apparatus 100) according to the disclosed embodiments.

In a case where a command is executed by the processor, the processor may directly perform a function corresponding to the command or other components may perform the function corresponding to the command under a control of the processor. The command may include codes created or executed by a compiler or an interpreter.

Hereinafter, although exemplary embodiments of the present disclosure have been illustrated and described, the present disclosure is not limited to the above-described specific exemplary embodiments, but may be variously modified by those skilled in the art to which the present disclosure pertains without departing from the gist of the present disclosure as disclosed in the accompanying claims. These modifications should also be understood to fall within the scope and spirit of the present disclosure.

## Claims

1. An electronic apparatus, comprising:
an antenna module including at least one first antenna, at least one second antenna, and at least one common antenna, wherein the antenna module is configured to transmit and receive data using the antennas;
a memory configured to store antenna combination information for performing a multi input multi output (MIMO) operation or a multi-link operation; and
at least one processor configured to control the antenna module to perform communication with an external device using an antenna combination based on the antenna combination information,
wherein the at least one processor is configured to:
identify whether an antenna is faulty based on a reception status of each of the at least one first antenna, the at least one second antenna, and the at least one common antenna,
identify an available antenna combination excluding an antenna combination including a faulty antenna based on the antenna combination information when the faulty antenna is identified, and
control the antenna module to communicate with the external device based on the available antenna combination,
wherein the at least one first antenna and the at least one second antenna are configured to operate in a first frequency band and a second frequency band, respectively, and
wherein the at least one common antenna is configured to selectively operate in the first frequency band and the second frequency band.

2. The electronic apparatus as claimed in claim 1, wherein the antenna combination information includes first ranking information generated based on a performance difference for each antenna in the first frequency band and second ranking information generated based on performance difference for each antenna in the second frequency band, and
the at least one processor identifies the available antenna combination based on the first ranking information and the second ranking information when the faulty antenna is identified.

3. The electronic apparatus as claimed in claim 2, wherein the at least one processor is configured to identify the available antenna combination by checking whether the antennas are available in order from a highest-ranking antenna to a lowest-ranking antenna based on the first ranking information when the faulty antenna is identified as an antenna used for communication with the external device in the first frequency band, and
identify the available antenna combination by checking whether the antennas are available in order from a highest-ranking antenna to a lowest-ranking antenna based on the second ranking information when the faulty antenna is identified as an antenna used for communication with the external device in the second frequency band.

4. The electronic apparatus as claimed in claim 1, wherein the antenna combination information includes first MIMO ranking information and second MIMO ranking information,
the at least one processor is configured to identify an antenna combination for a MIMO operation in the first frequency band based on the first MIMO ranking information when the faulty antenna is identified as an antenna used for the MIMO operation in the first frequency band, and
identify an antenna combination for a MIMO operation in the second frequency band based on the second MIMO ranking information when the faulty antenna is identified as an antenna used for the MIMO operation in the second frequency band,
the first MIMO ranking information is ranking information generated based on a performance difference for each of a plurality of antenna combinations for the MIMO operation in the first frequency band, and
the second MIMO ranking information is ranking information generated based on a performance difference for each of a plurality of antenna combinations for the MIMO operation in the second frequency band.

5. The electronic apparatus as claimed in claim 1, wherein the antenna combination information includes multi-link ranking information generated based on a performance difference for each of the plurality of antenna combinations forming a first communication link with the external device in the first frequency band and a second communication link with the external device in the second frequency band, and
the at least one processor is configured to identify the available antenna combination by determining whether a multi-link is possible for the plurality of antenna combinations in an order from a highest-ranking antenna combination to a lowest-ranking antenna combination based on the multi-link ranking information when the faulty antenna is identified as the antenna used for forming the first communication link or the second communication link.

6. The electronic apparatus as claimed in claim 1, wherein the antenna module includes at least one third antenna operating in a third frequency band, and
the at least one processor is configured to identify whether the antenna is faulty based on the reception status of each of the at least one first antenna, the at least one second antenna, the at least one third antenna, and the at least one common antenna.

7. The electronic apparatus as claimed in claim 1, wherein the available antenna combination includes a first combination for performing the MIMO operation in the first frequency band, a second combination for performing the MIMO operation in the second frequency band, and a third combination for performing the multi-link operation, and
the at least one processor is configured to identify one of the first combination, the second combination, and the third combination based on interference information of a communication environment and required bandwidth information for transmitting and receiving data with the external device, and
control the antenna module to communicate with the external device based on the identified one combination.

8. The electronic apparatus as claimed in claim 1, wherein the at least one processor is configured to identify an antenna that maintains received signal strength values in a preset range for a preset time among the at least one first antenna, the at least one second antenna, and the at least one common antenna, and
identify the identified antenna as the faulty antenna.

9. The electronic apparatus as claimed in claim 1, wherein the at least one processor is configured to compare the received signal strength values of the at least one first antenna, the at least one second antenna, and the at least one common antenna with each other, identify a difference in the received signal strength values for each of the at least one first antenna, the at least one second antenna and the at least one third antenna with the other antennas of the at least one first antenna, the at least one second antenna and the at least one third antenna included in the electronic apparatus, and
identify an antenna in which a representative value of the difference is negative and the representative value is smaller than the preset value as the faulty antenna.

10. The electronic apparatus as claimed in claim 1, further comprising:
a sensor,
wherein when it is identified that an external force greater than or equal to a threshold value is applied to the electronic apparatus based on a sensing value of the sensor, the at least one processor is configured to identify whether the antenna is faulty based on the reception status of each of the at least one first antenna, the at least one second antenna, and the at least one common antenna.

11. A controlling method of an electronic apparatus, comprising:
communicating with an external device through a multi input multi (MIMO) operation or a multi-link operation using an antenna module including at least one first antenna, at least one second antenna, and at least one common antenna;
identifying whether an antenna is faulty based on a reception status of each of the at least one first antenna, the at least one second antenna, and the at least one common antenna;
identifying an available antenna combination excluding an antenna combination including a faulty antenna based on antenna combination information when the faulty antenna is identified; and
communicating with the external device based on the available antenna combination,
wherein the at least one first antenna and the at least one second antenna operate in a first frequency band and a second frequency band, respectively, and
wherein the at least one common antenna selectively operates in the first frequency band and the second frequency band.

12. The controlling method as claimed in claim 11, wherein the antenna combination information includes first ranking information generated based on a performance difference for each antenna in the first frequency band and second ranking information generated based on a performance difference for each antenna in the second frequency band, and
the identifying of the available antenna combination includes identifying the available antenna combination based on the first ranking information and the second ranking information when the faulty antenna is identified.

13. The controlling method as claimed in claim 12, wherein the identifying of the available antenna combination includes:
identifying the available antenna combination by checking whether the antennas are available in order from a highest-ranking antenna to a lowest-ranking antenna based on the first ranking information when the faulty antenna is identified as an antenna used for communication with the external device in the first frequency band; and
identifying the available antenna combination by checking whether the antennas are available in order from a highest-ranking antenna to a lowest-ranking antenna based on the second ranking information when the faulty antenna is identified as an antenna used for communication with the external device in the second frequency band.

14. The controlling method as claimed in claim 11, wherein the antenna combination information includes first MIMO ranking information and second MIMO ranking information,
the first MIMO ranking information is ranking information generated based on a performance difference for each of a plurality of antenna combinations for the MIMO operation in the first frequency band, and
the second MIMO ranking information is ranking information generated based on a performance difference for each of a plurality of antenna combinations for the MIMO operation in the second frequency band, and
the identifying of the available antenna combination includes:
identifying an antenna combination for a MIMO operation in the first frequency band based on the first MIMO ranking information when the faulty antenna is identified as an antenna used for the MIMO operation in the first frequency band; and
identifying an antenna combination for a MIMO operation in the second frequency band based on the second MIMO ranking information when the faulty antenna is identified as an antenna used for the MIMO operation in the second frequency band.

15. A non-transitory computer-readable medium storing a computer instruction to cause an electronic apparatus to perform an operation when executed by a processor of the electronic apparatus, wherein the operation includes:
communicating with an external device through a multi input multi output (MIMO) operation or a multi-link operation using an antenna module including at least one first antenna, at least one second antenna, and at least one common antenna;
identifying whether an antenna is faulty based on a reception status of each of the at least one first antenna, the at least one second antenna, and the at least one common antenna;
identifying an available antenna combination excluding an antenna combination including a faulty antenna based on antenna combination information when the faulty antenna is identified; and
communicating with the external device based on the available antenna combination,
wherein the at least one first antenna and the at least one second antenna are configured to operate in a first frequency band and a second frequency band, respectively, and
wherein the at least one common antenna is configured to selectively operate in the first frequency band and the second frequency band.
